# FASCICULE DE BREVET EUROPEEN

(11) **EP 0 789 486 B1**
(45) Date de publication et mention de la délivrance du brevet: **10.10.2001**
(21) Numéro de dépôt: 97200209.1
(22) Date de dépôt: 27.01.1997
(51) Int. Cl.: H04N 3/16, H04N 5/63

(54) **Appareil d'affichage d'images, muni d'un dispositif de mise en veille progressif**
Bilderanzeigegerät mit einer progressiven Bereitschaftbetriebsvorrichtung
Picture display apparatus provided with a progressive standby device

(30) Priorité: 07.02.1996 FR 9601479
(43) Date de publication de la demande: 13.08.1997
(73) Titulaire: Koninklijke Philips Electronics N.V., 5621 BA Eindhoven (NL)
(72) Inventeur: Vacher, Pierre, 75008 Paris (FR)
(74) Mandataire: Charpail, François

(56) Documents cités:
- EP-A- 0 527 328
- GB-A- 2 082 413
- GB-A- 2 257 859

## Description

La présente invention concerne un appareil d'affichage d'images, muni d'un tube écran à faisceau cathodique et d'un dispositif qui
- génère un courant en dents de scie dans un bobinage déviateur du faisceau,
- produit au moyen d'un transformateur différentes tensions nécessaires pour l'appareil,
- et comprend, pour fournir le courant du bobinage déviateur, un transistor de puissance bipolaire dont le courant de base
   - est auto-entretenu par une réaction positive procurée par un enroulement du transformateur, connecté dans un sens tel qu'il fournit à la base du transistor de puissance une tension propre à renforcer sa conduction lorsqu'il est déjà conducteur,
   - et est détourné, de façon à bloquer le transistor de puissance, pendant des périodes de temps intervenant à intervalles réguliers, par un élément, dit élément de blocage, qui est commandé par un signal à fréquence ligne.

Un tel appareil d'affichage d'images est connu du document GB 2082413. Dans le circuit selon ce document, l'élément (T1) qui détourne le courant de base est directement commandé par un signal rectangulaire de synchronisation ligne.

Dans un tel appareil d'affichage d'images il est souhaitable que la procédure de mise en veille ne produise pas de brûlure du tube et supprime toute haute tension résiduelle après l'arrêt, et que le démarrage ne produise pas de surintensités dans le circuit de balayage ligne.

Le document EP-A-0 527 328 propose pour cela un dispositif comportant un circuit intégrateur dont l'entrée est reliée à une borne qui porte un signal de commande marche/veille, et dont la sortie, présentant une tension qui varie progressivement lors d'une transition de la valeur du signal de commande marche/veille, est reliée à un montage qui fait varier, en fonction de la dite tension de sortie, le facteur de forme du signal à fréquence ligne qui commande l'élément de blocage.

Dans ce document ledit montage comprend un circuit intégré du type PLL. L'objet de la présente invention est de réaliser un dispositif plus souple dans sa mise en oeuvre et plus économique.

A cet effet le montage selon l'invention est tel que défini dans la partie charactérisante de la revendication 1.

Dans un mode de réalisation particulier, pour constituer l'élément de blocage, le trajet principal de courant d'un transistor, dit transistor de blocage, commandé à partir du dit signal à fréquence ligne, est placé entre la base du transistor de puissance et un point de référence de tension.

De préférence, la base du transistor de blocage est reliée à l'émetteur d'un transistor, dit transistor de commande, lui même commandé à partir du signal à fréquence ligne et dont le collecteur est relié par une première résistance à une source de tension d'alimentation, une première capacité reliant le collecteur du transistor de commande à la base du transistor de puissance.

Un tel montage permet d'amorcer l'auto-entretien du courant de base du transistor de puissance, après une période de blocage.

Avantageusement, le dispositif comprend un opto-coupleur, dont le transistor récepteur constitue le dit transistor de commande, et dont la diode émettrice est alimentée à partir du dit signal à fréquence ligne.

Ceci permet une isolation galvanique entre le déviateur ligne et les autres circuits de l'appareil, isolés du secteur.

Dans un mode de réalisation particulier, la diode émettrice est alimentée par un autre transistor dont la base est reliée par une deuxième capacité à une source de signal rectangulaire à fréquence ligne dont l'amplitude est variable en fonction de la valeur du signal marche/veille.

Ceci permet d'assurer une auto-limitation de la durée de conduction du transistor de puissance, en cas d'anomalie du circuit de commande.

Avantageusement, le courant de base du transistor de puissance est fourni par un arrangement dont une extrémité est reliée à un point de référence de tension, et qui comprend en cascade le dit enroulement du transformateur, une inductance, et une diode, et dont l'autre extrémité est reliée à la base du transistor de puissance par un ensemble fait d'une troisième résistance et d'une troisième capacité en parallèle.

Avantageusement, une des bornes de la diode étant reliée à la troisième résistance, une quatrième résistance est connectée entre l'autre borne de la diode et la base du transistor de puissance.

Cette résistance permet la transmission de tensions négatives pour bloquer le transistor de puissance.

Ces aspects de l'invention ainsi que d'autres aspects plus détaillés apparaîtront plus clairement grâce à la description suivante d'un mode de réalisation constituant un exemple non limitatif.

La figure 1 représente schématiquement un appareil d'affichage d'images muni d'un tube écran à faisceau cathodique.

La figure 2 est un schéma d'un dispositif selon l'invention.

L'invention va être décrite en référence à un téléviseur, mais elle s'applique aussi bien à tout appareil d'affichage d'images, par exemple à un moniteur.

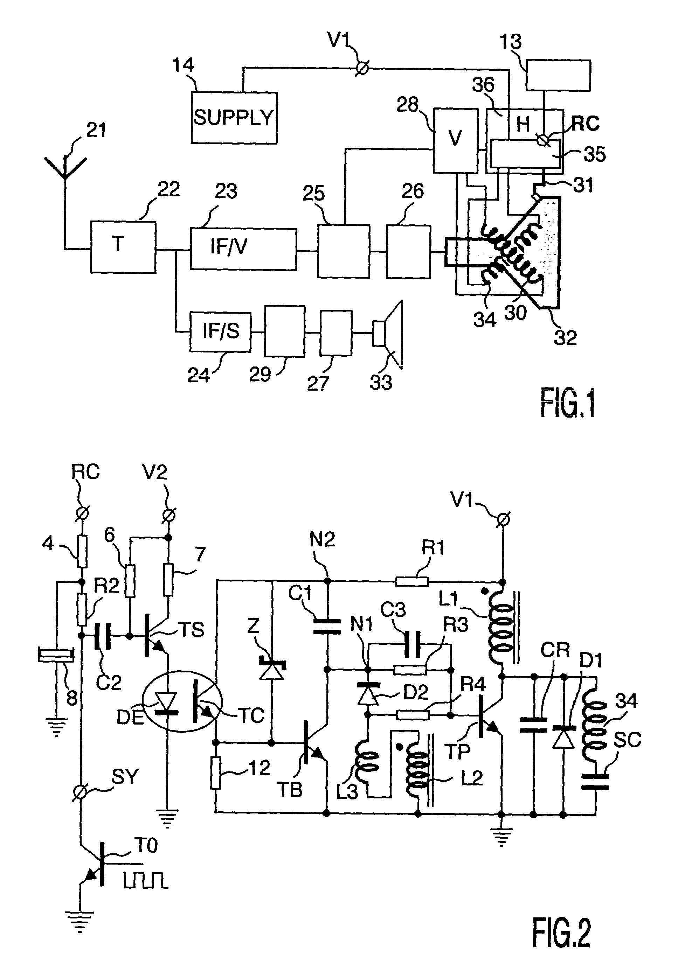

Le téléviseur dont le schéma est représenté sur la figure 1 comprend un syntoniseur 22 recevant un signal par exemple d'une antenne 21 et transposant sa fréquence vers des fréquences intermédiaires destinées à un amplificateur vidéo 23 et à un amplificateur son 24 qui lui font suite.

L'amplificateur à fréquence intermédiaire son 24 est suivi d'un démodulateur 29 qui délivre les signaux audio en bande de base à un amplificateur de puissance audio 27, alimentant un haut-parleur 33. L'amplificateur à fréquence intermédiaire vidéo 23 est suivi d'une unité 25 qui fournit un signal vidéo en bande de base à un amplificateur vidéo 26 délivrant les signaux ad-hoc aux électrodes d'un tube écran 32 à faisceau cathodique. L'unité 25 extrait aussi du signal des signaux de synchronisation qui sont amenés à un circuit de balayage vertical 28 et à un circuit de balayage ligne 36. Le circuit de balayage vertical 28 délivre un courant dans un bobinage déviateur de trame 30. Le circuit de balayage ligne est muni d'une unité de puissance ligne 35 qui délivre un courant dans un bobinage déviateur 34 de ligne, et produit une tension dite "THT", d'environ 25 kV, pour alimenter l'écran du tube écran, auquel elle est reliée par une connexion 31. Le circuit de puissance ligne 35 est alimenté, via une connexion V1, par une alimentation 14, par exemple du type à découpage, reliée au secteur. Les autres circuits 22-29 sont alimentés, comme cela est habituel, à partir de l'étage de puissance ligne 35, par des connexions non représentées pour simplifier la figure. Un récepteur de télécommande 13 est relié au circuit de balayage ligne 36 par une connexion RC, pour en commander l'extinction ou le démarrage, ce qui entraîne respectivement la mise en veille ou la mise en fonctionnement des parties de l'appareil qui sont alimentées par l'étage de puissance ligne 35.

Le dispositif représenté par la figure 2 comprend un transistor de puissance TP, ici de type NPN, qui agit de façon connue comme interrupteur du courant du bobinage déviateur 34. De façon connue également, le bobinage déviateur est connecté en série avec une capacité SC dite "de S", et une diode de récupération D1 ainsi qu'une capacité de retour CR sont montées en parallèle sur le transistor de puissance TP. Un transformateur dit "THT" comporte de façon connue un enroulement primaire et une pluralité d'enroulements secondaires. Seul l'enroulement primaire L1 est représenté, lequel est connecté entre le collecteur du transistor de puissance TP et la borne d'alimentation de puissance V1, dont la tension est ici positive et par exemple d'une centaine de volts. Cette tension est fournie par l'alimentation secteur 14 de la figure 1. Elle est donc liée galvaniquement au secteur.

Un courant de base est fourni au transistor TP par un arrangement comprenant en cascade, à partir d'un point de référence de tension, qui est ici la masse :
- un enroulement L2, qui est un enroulement du transformateur THT, qui est donc couplé magnétiquement avec l'enroulement L1, et qui est connecté dans un sens, indiqué par des points aux extrémités correspondantes de L1 et de L2, tel qu'il fournisse une tension positive, propre à rendre conducteur le transistor de puissance TP, pendant l'aller du balayage,
- une inductance L3, non couplée magnétiquement aux autres inductances,
- une diode D2, dont le sens passant permet le passage du courant de base de TP, et dont la cathode est reliée à un noeud Ni.

L'extrémité de l'arrangement L2+L3+D2, c'est-à-dire le noeud Ni, est reliée à la base du transistor de puissance TP par un ensemble fait d'une résistance R3 et d'une capacité C3 en parallèle.

Une résistance R4 est connectée en outre entre le point commun de l'inductance L3 et de la diode D2, d'une part, et la base du transistor de puissance TP, d'autre part. Si pour une raison quelconque le blocage du transistor TP n'est pas commandé en temps utile, le courant continue de croître jusqu'à désaturation du transistor TP, à ce moment le courant cesse de croître, ce qui réduit la tension dans L2, et donc le courant de base. Le phénomène est cumulatif et le transistor va se bloquer. Le blocage est renforcé par la surtension de retour présente dans L2, qui est transmise à la base de TP par la résistance R4.

Un transistor TB de type NPN, dit transistor de blocage, qui est destiné à détourner le courant de base du transistor de puissance, de façon à le bloquer, relie à cet effet le noeud Ni à la masse. L'inductance L3 déjà mentionnée sert à limiter le courant dans le transistor TB lorsque la tension aux bornes de L2 est positive, bien que le transistor TP soit bloqué, pendant la phase de conduction de la diode D1.

A partir de la borne d'alimentation V1, une résistance R1 est connectée en N2 avec le collecteur d'un transistor TC de type NPN, dit transistor de commande, dont l'émetteur fournit un courant à la base du transistor de blocage TB, tandis qu'une résistance 12 entre base et émetteur de ce dernier facilite son blocage quand le transistor TC se bloque. Une diode zener Z est connectée entre le point commun N2 et la base de TB, bien entendu dans un sens tel qu'elle ne court-circuite pas TC en fonctionnement normal. En cas de défaillance dans la commande de mise en conduction de TC, ou bien en cas de surtension de l'alimentation, la tension monterait en N2 jusqu'à provoquer la mise en conduction de la diode Z, et par suite le blocage du transistor TP.

Une capacité relie le point N2 au collecteur du transistor TB, c'est-à-dire en fin de compte à la base du transistor TP, via C3-R3. Le transistor TC est lui même commandé alternativement en conduction et en blocage, à partir d'un circuit générateur de signaux de synchronisation ligne, d'une manière qui sera décrite plus loin. La capacité C1 est partiellement déchargée lors de la conduction simultanée du transistor TC et du transistor TB, ce qui lui permet de fournir ensuite transitoirement, au moment où les transistors TC et TB se bloquent, un courant dans la base du transistor de puissance pour amorcer son auto-entretien.

Le transistor de commande TC est le transistor récepteur d'un ensemble opto-coupleur, dont la diode émettrice DE est alimentée par un transistor TS dont le collecteur est relié par une résistance 7 à une alimentation V2 qui demeure présente lorsque l'appareil est en veille (il s'agit d'une tension qui est fournie, de façon connue en soi, par un enroulement isolé du secteur, dans l'alimentation 14 de la figure 1). La base du transistor TS est reliée par une résistance de polarisation 6 à la source de tension V2, et, via une capacité C2, à une borne SY qui est une sortie d'un circuit intégré fournissant un signal rectangulaire de synchronisation ligne. La résistance 6 a une valeur telle qu'en l'absence de commande via la capacité C2, le transistor TS est saturé.

Le dit circuit intégré est par exemple un membre de la série connue sous l'appellation TDA 8360. Il renferme à lui seul plusieurs des éléments de la figure 1 et fournit, entre autres, un signal à fréquence ligne. Ce signal est délivré par une sortie à collecteur ouvert, ce qui est indiqué par un transistor TO sur la figure.

Une borne RC porte un signal de commande marche/veille en provenance du circuit récepteur de télécommande. Le signal sur la borne RC est par exemple à +5 volt quand l'appareil est en marche, et descend à zéro volt, quand l'appareil est mis en état de veille. A la borne RC est relié un circuit intégrateur fait d'une résistance 4 suivie d'une capacité 8 reliée à la masse. La sortie du circuit intégrateur, c'est-à-dire le point commun de la résistance 4 et de la capacité 8, est reliée à sortie SY par une résistance R2.

Le fonctionnement est le suivant: en marche normale, la tension en RC est haute, le collecteur du transistor TO, chargé par la résistance R2, porte un signal de synchronisation ligne, qui est ici un signal carré, et qui est transmis par la capacité C2 à la base du transistor TS. Pendant les périodes du signal carré où la tension est basse en SY, la capacité C2 se charge via la résistance 6, et la tension remonte sur la base du transistor TS. Les valeurs choisies pour ces éléments sont telles qu'en fonctionnement normal la tension remonte presque assez, mais pas tout à fait assez, pour rendre le transistor TS conducteur avant la remontée du signal carré en SY. Si pour une raison quelconque, il y avait absence de la synchronisation par TO en temps voulu, ce phénomène provoquerait la conduction de TS et le blocage de TP avant que le courant ne s'y accroisse dangereusement.

Lorsque, lors de la mise en veille, la tension tombe à zéro sur la borne RC, l'armature active de la capacité 8, c'est à dire le point "froid" de la résistance R2, est amené progressivement à zéro, et l'amplitude des impulsions sur SY diminue progressivement jusqu'à s'annuler. Lorsque cette amplitude diminue, la remontée de la tension sur la base de TS, du fait de la charge de la capacité C2 mentionnée plus haut, amène le transistor TS en conduction plus tôt, ce qui bloque plus tôt le transistor de puissance TP, dont le temps de conduction est ainsi réduit progressivement, ainsi que, par voie de conséquence, l'amplitude du courant de déflexion dans le déviateur 34 et la tension THT.

Un phénomène réciproque se produit lorsque la tension revient à 5 volt sur la borne RC. Ainsi sont obtenues un arrêt et un démarrage progressifs du balayage ligne. Les valeurs de la résistance 4 et de la capacité 8 permettent d'ajuster la durée des phases "d'allumage" et "d'extinction" du transistor TS.

## Revendications

1. Appareil d'affichage d'images, muni d'un tube écran (32) à faisceau cathodique et d'un dispositif qui
- génère un courant en dents de scie dans un bobinage (34) déviateur du faisceau,
- produit au moyen d'un transformateur différentes tensions nécessaires pour l'appareil,
- et comprend, pour fournir le courant du bobinage déviateur, un transistor (TP) de puissance bipolaire dont le courant de base
- est auto-entretenu par une réaction positive procurée par un enroulement (L2) du transformateur, connecté dans un sens tel qu'il fournit à la base du transistor de puissance une tension propre à renforcer sa conduction lorsqu'il est déjà conducteur,
- et est détourné, de façon à bloquer le transistor de puissance, par un élément (TB), dit élément de blocage, qui est rendu alternativement conducteur et bloqué par un signal à fréquence ligne,
- comporte un circuit intégrateur (4,8) dont l'entrée est reliée à une borne (RC) qui porte un signal marche/veille, et dont la sortie, qui porte une tension variant progressivement lors d'une transition de la valeur du signal marche/veille, est reliée à un montage qui fait varier, en correspondance avec la dite tension de sortie, le facteur de forme du signal à fréquence ligne qui commande l'élément de blocage,
**caractérisé en ce que** ledit montage comprend :
- un transistor d'amplification (T0) recevant sur sa base un signal à fréquence de balayage ligne, et ayant son collecteur relié via une résistance de collecteur (R2) à ladite tension variant progressivement,
- une capacité (C2), dite deuxième capacité, et une résistance de base (6) montées en série entre le collecteur dudit transistor d'amplification (T0) et une source de tension (V2),
- un transistor de contrôle (TS) dont la base est reliée au point milieu de la deuxième capacité (C2) et de la résistance de base(6), les états de conduction/non-conduction dudit transistor de contrôle (TS) contrôlant respectivement les états de non-conduction/conduction dudit transistor de puissance (TP).

2. Appareil selon la revendication 1, **caractérisé en ce que**, pour constituer l'élément de blocage, le trajet principal de courant d'un transistor, dit transistor de blocage (TB), commandé à partir du dit signal à fréquence ligne, est placé entre la base du transistor de puissance (TP) et un point de référence de tension.

3. Appareil selon la revendication 2, **caractérisé en ce que** la base du transistor de blocage (TB) est reliée à l'émetteur d'un transistor, dit transistor de commande (TC), lui même commandé à partir du signal à fréquence ligne et dont le collecteur est relié par une première résistance (R1) à une source de tension d'alimentation (V1), une première capacité (C1) reliant le collecteur du transistor de commande (TC) à la base du transistor de puissance (TP).

4. Appareil selon la revendication 3, **caractérisé en ce qu'**il comprend un opto-coupleur (DE, TC), dont le transistor récepteur (TC) constitue le dit transistor de commande, et dont la diode émettrice (DE) est alimentée à partir du dit signal à fréquence ligne.

5. Appareil selon la revendication 4, **caractérisé en ce que** la diode émettrice (DE) est alimentée par ledit transistor de contrôle (TS) dont la base est reliée par la deuxième capacité (C2) à une source de signal rectangulaire à fréquence ligne dont l'amplitude est variable en fonction de la valeur du signal marche/veille.

6. Appareil selon la revendication 1, **caractérisé en ce que** le courant de base du transistor de puissance (TP) est fourni par un arrangement dont une extrémité est reliée à un point de référence de tension, et qui comprend en cascade le dit enroulement (L2) du transformateur, une inductance (L3), et une diode (D2).

7. Appareil selon la revendication 7, **caractérisé en ce que** l'autre extrémité du dit arrangement est reliée à la base du transistor de puissance (TP) par un ensemble fait d'une troisième résistance (R3) et d'une troisième capacité (C3) en parallèle.

8. Appareil selon la revendication 8, **caractérisé en ce que**, une des bornes de la diode (D2) étant reliée à la troisième résistance (R3), une quatrième résistance (R4) est connectée entre l'autre borne de la diode et la base du transistor de puissance (TP).

## Patentansprüche

1. Bildanzeigegerät, versehen mit einer Bildschirmröhre (32) und einer Vorrichtung, die
- einen Sägezahnstrom in einer Bildablenkspule (34) erzeugt,
- mit einem Transformator verschiedene, für das Gerät notwendige Spannungen erzeugt,
- und, um den Strom der Ablenkspule zu liefern, einen bipolaren Leistungstransistor (TP) enthält, dessen Basisstrom
- über eine positive Reaktion selbsthaltend ist, bewirkt von einer Wicklung (L2) des Transformators, so in einer Richtung angeschlossen, um der Basis des Leistungstransistors eine geeignete Spannung zu liefern, um dessen Leitfähigkeit zu erhöhen, wenn er bereits leitend ist,
- und umgeleitet wird, um den Leistungstransistor zu sperren, durch ein Element (TB), dem sogenannten Sperrelement, das abwechselnd leitend gemacht und von einem Zeilenfrequenzsignal gesperrt wird,
- eine Integratorschaltung (4, 8) aufweist, deren Eingang mit einer Klemme (RC) verbunden ist, die ein Betrieb/Bereitschaft-Signal trägt, und deren Ausgang, der beim Wechsel des Wertes des Betrieb/Bereitschaft-Signals eine progressiv variierende Spannung aufweist, mit einem Schaltkreis verbunden ist, der den Formfaktor des Zeilenfrequenzsignals zur Steuerung des Sperrelements in Übereinstimmung mit der besagten Ausgangsspannung variieren läßt,
**dadurch gekennzeichnet, daß** der besagte Schaltkreis enthält:
- einen Verstärkertransistor (TO), der an seiner Basis ein Zeilenabtast-Frequenzsignal erhält und mit seinem Kollektor über einen Kollektorwiderstand (R2) mit der besagten progressiv variierenden Spannung verbunden ist,
- eine Kapazität (C2), die sogenannte zweite Kapazität, und einen Basiswiderstand (6), in Serie zwischen den Kollektor des besagten Verstärkertransistors (TO) und eine Spannungsquelle (V2) geschaltet,
- einen Steuertransistor (TS), dessen Basis mit dem Mittelpunkt der zweiten Kapazität (C2) und des Basiswiderstands (6) verbunden ist, wobei die leitenden/nichtleitenden Zustände des besagten Steuertransistors (TS) respektive die nichtleitenden/leitenden Zustände des besagten Leistungstransistors (TP) steuern.

2. Gerät nach Anspruch 1, **dadurch gekennzeichnet, daß**, um das Sperrelement zu bilden, der Hauptweg des Stromes eines Transistors, dem sogenannten Sperrtransistor (TB), gesteuert von dem besagten Zeilenfrequenzsignal, zwischen der Basis des Leistungstransistors (TP) und einem Spannungsbezugspunkt liegt.

3. Gerät nach Anspruch 2, **dadurch gekennzeichnet, daß** die Basis des Sperrtransistors (TB) mit dem Emitter eines Transistors verbunden ist, dem sogenannten Steuertransistor (TC), der selbst von einem Zeilenfrequenzsignal gesteuert wird und dessen Kollektor über einen ersten Widerstand (R1) an eine Versorgungsspannungsquelle (V1) angeschlossen ist, wobei eine erste Kapazität (C1) den Kollektor des Steuertransistors (TC) mit der Basis des Leistungstransistors (TP) verbindet.

4. Gerät nach Anspruch 3, **dadurch gekennzeichnet, daß** die Vorrichtung ein optoelektronisches Koppelelement (DE, TC) enthält, dessen empfangender Transistor (TC) den besagten Steuertransistor bildet und dessen Sendediode (DE) von dem besagten Zeilenfrequenzsignal versorgt wird.

5. Gerät nach Anspruch 4, **dadurch gekennzeichnet, daß** die Sendediode (DE) von dem besagten Steuertransistor (TC) versorgt wird, dessen Basis über die besagte Kapazität (C2) mit einer Rechtecksignalquelle zu Zeilenfrequenz verbunden ist und dessen Amplitude entsprechend dem Wert des Betrieb/Bereitschaft-Signals variabel ist.

6. Gerät nach Anspruch 1, **dadurch gekennzeichnet, daß** der Basisstrom des Leistungstransistors (TP) von einer Anordnung geliefert wird, deren eines Ende mit einem Spannungsbezugspunkt verbunden ist, der in Kaskade die besagte Transformatorwicklung (L2), eine Induktanz (L3) und eine Diode (D2) enthält.

7. Gerät nach Anspruch 6, **dadurch gekennzeichnet, daß** das andere Ende der besagten Anordnung mit der Basis des Leistungstransistors (TP) über ein System verbunden ist, das aus einem dritten Transistor (R3) und parallel dazu einer dritten Kapazität (C3) besteht.

8. Gerät nach Anspruch 7, **dadurch gekennzeichnet, daß** eine der Klemmen der Diode (D2) mit dem dritten Widerstand (R3) verbunden, und ein vierter Widerstand (R4) zwischen der anderen Klemme der Diode und der Basis des Leistungstransistors (TP) angeschlossen ist.

## Claims

1. A picture display apparatus provided with a cathode ray tube (32) and a device which
- generates a sawtooth current in a beam deflection coil (34),
- produces, by means of a transformer, different voltages required for the apparatus,
- and comprises, for supplying the deflection coil current, a bipolar power transistor (TP) whose base current
- is automatically maintained by a positive feedback provided by a winding (L2) of the transformer connected in such a sense that it supplies a voltage to the base of the power transistor which is suitable for increasing its conductance when it is already conducting,
- and is diverted so as to render the power transistor non-conducting by means of an element (TB) referred to as blocking element which is alternately rendered conducting and non-conducting by a line frequency signal,
- comprises an integrator circuit (4, 8) having an input which is connected to a terminal (RC) which conveys a run/standby signal and an output which conveys a voltage varying progressively during a transition of the value of the run/standby signal and is connected to an assembly which, as a function of said output voltage, varies the duty factor of the line frequency signal which controls the blocking elements, **characterized in that** said assembly comprises:
- an amplifier transistor (TO) whose base receives a line scanning frequency signal and whose collector is connected to said progressively varying voltage via a collector resistor (R2),
- a capacitance (C2), referred to as second capacitance, and a base resistor (6) arranged in series between the collector of said amplifier transistor (TO) and a voltage source (V2),
- a control transistor (TS) whose base is connected to the central point of the second capacitance (C2) and the base resistor (6), the states of conductance/non-conductance of said control transistor (TS) controlling the states of non-conductance/conductance, respectively, of said power transistor (TP.

2. An apparatus as claimed in claim 1, **characterized in that**, for constituting the blocking element, the main current path of a transistor referred to as blocking transistor (TB), controlled by said line frequency signal, extends between the base of the power transistor (TP) and a voltage reference point.

3. An apparatus as claimed in claim 2, **characterized in that** the base of the blocking transistor (TB) is connected to the emitter of a transistor referred to as control transistor (TC) which is controlled by a line frequency signal and whose collector is connected via a first resistor (R1) to a power supply source (V1), a first capacitance (C1) connecting the collector of the control transistor (TC) to the base of the power transistor (TP).

4. An apparatus as claimed in claim 3, **characterized in that** the apparatus comprises an optocoupler (DE, TC) having a receiver transistor (TC), which constitutes said control transistor, and an emitter diode (DE) which is fed with said line frequency signal.

5. An apparatus as claimed in claim 4, **characterized in that** the emitter diode (DE) is fed by said control transistor (TS) whose base is connected by means of the second capacitance (C2) to a source supplying a square-wave line frequency signal having an amplitude which is variable as a function of the value of the run/standby signal.

6. An apparatus as claimed in claim 1, **characterized in that** the base current of the power transistor (TP) is supplied by an arrangement having one end connected to a voltage reference point and comprising, in cascade, said transformer winding (L2), an inductance (L3) and a diode (D2).

7. An apparatus as claimed in Claim 6, **characterized in that** the other end of said arrangement is connected to the base of the power transistor (TP) by means of an assembly consisting of a third resistor (R3) in parallel with a third capacitance (C3).

8. An apparatus as claimed in Claim 7, **characterized in that**, with one of the terminals of the diode (D2) being connected to the third resistor (R3), a fourth resistor (R4) is connected between the other terminal of the diode and the base of the power transistor (TP).
